(19) Europäisches Patentamt
European Patent Office
Office européen des brevets

(11) **EP 3 248 079 B1**

(12) **FASCICULE DE BREVET EUROPEEN**

(45) Date de publication et mention
de la délivrance du brevet:
**31.07.2019 Bulletin 2019/31**

(21) Numéro de dépôt: **16712898.2**

(22) Date de dépôt: **31.03.2016**

(51) Int Cl.:
***G05D 1/08*** *(2006.01)*    ***B64G 1/28*** *(2006.01)*

(86) Numéro de dépôt international:
**PCT/EP2016/057051**

(87) Numéro de publication internationale:
**WO 2016/156487 (06.10.2016 Gazette 2016/40)**

(54) **PROCÉDÉ ET DISPOSITIF DE CONTRÔLE D'ATTITUDE D'UN ENGIN SPATIAL**

VERFAHREN UND VORRICHTUNG ZUR STEUERUNG DER STELLUNG EINES RAUMFAHRZEUGS

METHOD AND DEVICE FOR CONTROLLING ATTITUDE OF A SPACECRAFT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **31.03.2015 FR 1552736**

(43) Date de publication de la demande:
**29.11.2017 Bulletin 2017/48**

(73) Titulaire: **Airbus Defence and Space SAS**
**31402 Toulouse Cedex 4 (FR)**

(72) Inventeurs:
 • **CUILLERON, Nicolas**
   **31402 Toulouse Cedex 4 (FR)**
 • **LAURENS, Philippe**
   **31402 Toulouse Cedex 4 (FR)**
 • **MORO, Valerio**
   **31402 Toulouse Cedex 4 (FR)**

(74) Mandataire: **Ipside**
   **6, Impasse Michel Labrousse**
   **31100 Toulouse (FR)**

(56) Documents cités:
   **EP-A2- 2 690 020**

 • **"Time-optimal reorientation for rigid satellite with reaction wheels", , 10 octobre 2012 (2012-10-10), XP055253731, Extrait de l'Internet: URL:http://www.tandfonline.com/doi/pdf/10. 1080/00207179.2012.688873 [extrait le 2016-02-29]**

EP 3 248 079 B1

## Description

## DOMAINE TECHNIQUE

La présente invention appartient au domaine du contrôle d'attitude d'engins spatiaux, tels que des satellites, et concerne plus particulièrement un procédé et un système de contrôle d'attitude d'un engin spatial en rotation sur lui-même avec un moment cinétique total initial non nul.

Par « contrôle d'attitude », on entend ici plus particulièrement modifier l'orientation de l'engin spatial par rapport à l'axe dudit moment cinétique total initial, dit « axe cinétique », c'est-à-dire aligner, dans un repère associé à la géométrie de l'engin spatial, dit « repère engin », ledit axe cinétique avec un axe prédéterminé en repère engin.

## ÉTAT DE LA TECHNIQUE

Pour modifier l'orientation d'un engin spatial par rapport à l'axe cinétique, il est connu :

- d'arrêter la rotation de l'engin spatial en repère inertiel en absorbant ledit moment cinétique total au moyen de volants d'inertie (roues à réaction, actionneurs gyroscopiques),
- de placer, au moyen desdits volants d'inertie, l'engin spatial dans l'orientation choisie par rapport à l'axe dudit moment cinétique total,
- de transférer le moment cinétique total stocké dans les volants d'inertie à l'engin spatial dans l'orientation choisie.

Une telle approche suppose toutefois que le moment cinétique total initial se trouve dans la capacité d'absorption des volants d'inertie, ce qui ne peut pas toujours être garanti.

Notamment, le moment cinétique total initial, transféré à un satellite au moment de la séparation avec un lanceur dudit satellite, est généralement trop important pour être absorbé par les volants d'inertie dudit satellite.

A titre d'exemple, le moment cinétique total initial d'un satellite après lancement peut être de l'ordre de 500 N·m·s à 1000 N·m·s, alors que la capacité des volants d'inertie embarqués dans un satellite est généralement de l'ordre de 50 N·m·s à 100 N·m·s. En outre, quand bien même les volants d'inertie seraient dimensionnés de sorte à présenter une capacité de 1000 N·m·s, des conditions particulièrement défavorables de séparation pourraient toujours transférer au satellite un moment cinétique initial supérieur à 1000 N·m·s, en dehors de la capacité d'absorption des volants d'inertie.

C'est pourquoi, de nos jours, la modification de l'orientation d'un satellite, par rapport à l'axe cinétique après lancement, est généralement précédée d'une diminution dudit moment cinétique total au moyen de propulseurs chimiques, permettant de ramener ledit moment cinétique total dans la capacité d'absorption des volants d'inertie.

Il est actuellement envisagé que les futurs satellites ne soient plus équipés de propulseurs chimiques, mais uniquement de propulseurs électriques (plasmiques). Or les propulseurs électriques ne peuvent pas se substituer aux propulseurs chimiques, pour réduire le moment cinétique total d'un satellite après séparation, tant que l'autonomie électrique dudit satellite n'est pas assurée. Or l'autonomie électrique du satellite ne peut être assurée qu'en plaçant ledit satellite dans une orientation adaptée.

La demande de brevet européen EP 2690020 A2 décrit un procédé de réduction du moment cinétique total d'un satellite, comportant une étape, préalable à la réduction du moment cinétique total, d'alignement de l'axe du moment cinétique total avec un axe d'inertie maximale ou minimale du satellite. Dans la demande de brevet européen EP 2690020 A2, l'étape d'alignement de l'axe du moment cinétique total avec l'axe d'inertie maximale ou minimale dudit satellite consiste à asservir le moment cinétique formé par des volants d'inertie du satellite sur la vitesse de rotation du satellite. Toutefois, une telle commande des volants d'inertie ne permet pas toujours d'assurer une convergence de l'axe du moment cinétique total avec l'axe d'inertie maximale ou minimale dudit satellite, en particulier dans le cas de volants d'inertie à faible capacité.

## EXPOSÉ DE L'INVENTION

La présente invention a pour objectif de remédier à tout ou partie des limitations des solutions de l'art antérieur, notamment celles exposées ci-avant, en proposant une solution qui permette de modifier l'orientation d'un engin spatial par rapport à l'axe cinétique au moyen uniquement de volants d'inertie, y compris lorsque ledit moment cinétique total initial est supérieur à la capacité d'absorption des volants d'inertie.

A cet effet, et selon un premier aspect, l'invention concerne un procédé de contrôle d'attitude d'un engin spatial selon la revendication 1.

En effet, les inventeurs ont constaté que de telles dispositions permettent toujours d'aligner l'axe du moment cinétique total avec l'axe principal d'inertie visé (soit l'axe d'inertie maximale soit l'axe d'inertie minimale). Dans le cas où l'axe principal d'inertie visé est l'axe d'inertie maximale, de telles dispositions permettent en outre d'accélérer significativement la convergence par rapport au cas où aucun contrôle n'est effectué (un engin spatial soumis à un moment cinétique total non nul ayant, du fait de dissipations internes d'énergie et en l'absence de contrôle, tendance à converger lentement vers une orientation dans laquelle l'axe dudit moment cinétique total est aligné avec l'axe d'inertie maximale).

En outre, le signe de l'expression $H_{ACT} \times J^{-1}(H_{TOT} \otimes J^{-1}H_{TOT})$ est entièrement déterminé par la direction et le sens du moment cinétique interne $H_{ACT}$, et est indépendant du module dudit moment cinétique interne $H_{ACT}$. Par conséquent, le procédé de contrôle d'attitude objet de l'invention peut être mis en oeuvre y compris lorsque le moment cinétique total $H_{TOT}$ initial est supérieur à la capacité d'absorption des volants d'inertie de l'engin spatial. En d'autres termes, on peut toujours assurer que le moment cinétique interne $H_{ACT}$ respecte la capacité maximale de stockage de moment cinétique des volants d'inertie et la capacité maximale de formation de couple des volants d'inertie.

Selon le procédé de la revendication 1, les volants d'inertie sont commandés de sorte à former un moment cinétique interne $H_{ACT}$ pour lequel un angle θ entre ledit moment cinétique interne $H_{ACT}$ et le vecteur $J^{-1}(H_{TOT} \otimes J^{-1}H_{TOT})$ vérifie, pendant toute la durée de l'étape d'alignement avec l'axe principal d'inertie, l'expression suivante :

$$|\cos\theta| > 0.9$$

De telles dispositions permettent d'accélérer significativement la convergence vers l'axe principal d'inertie visé, étant entendu que la direction du vecteur $J^{-1}(H_{TOT} \otimes J^{-1}H_{TOT})$ est la direction optimale pour avoir la convergence la plus rapide vers l'axe principal d'inertie visé.

Dans des modes particuliers de mise en oeuvre, le procédé de contrôle d'attitude peut comporter en outre l'une ou plusieurs des caractéristiques suivantes, prises isolément ou selon toutes les combinaisons techniquement possibles. Dans des modes particuliers de mise en oeuvre, les volants d'inertie sont commandés, pendant toute la durée de l'étape d'alignement avec l'axe principal d'inertie, de sorte à former un moment cinétique interne $H_{ACT}$ :

$$H_{ACT} = K_V \cdot U$$

expression dans laquelle $K_V$ est un paramètre scalaire négatif si l'axe principal d'inertie visé est l'axe d'inertie maximale de l'engin spatial ou positif si ledit axe principal d'inertie visé est l'axe d'inertie minimale dudit engin spatial, et U correspond au vecteur unitaire :

$$U = \frac{J^{-1}(H_{TOT} \otimes J^{-1}H_{TOT})}{\|J^{-1}(H_{TOT} \otimes J^{-1}H_{TOT})\|}$$

Dans des modes particuliers de mise en oeuvre, le procédé de contrôle d'attitude comporte, après l'étape d'alignement avec l'axe principal d'inertie, une étape d'alignement avec un axe X prédéterminé en repère engin, au cours de laquelle les volants d'inertie sont commandés de sorte à asservir les composantes du moment cinétique interne $H_{ACT}$ suivant des axes Y, Z, transverses à l'axe X, sur des consignes respectivement $h_Y$ et $h_Z$ déterminées en fonction des composantes de la vitesse de rotation de l'engin spatial suivant lesdits axes Y, Z :

-   la consigne $h_Y$ du moment cinétique interne $H_{ACT}$ suivant l'axe Y est déterminée suivant une loi de commande de type proportionnelle-intégrale à partir de la composante r de la vitesse de rotation suivant l'axe Z,
-   la consigne $h_Z$ du moment cinétique interne $H_{ACT}$ suivant l'axe Z est déterminée suivant une loi de commande de type proportionnelle-intégrale à partir de la composante q de la vitesse de rotation suivant l'axe Y.

De telles dispositions permettent de réduire la nutation éventuelle de l'engin spatial autour de l'axe principal d'inertie visé. En effet, la loi de commande des volants d'inertie au cours de l'étape d'alignement avec l'axe principal d'inertie est non linéaire permet d'aligner l'axe cinétique avec l'axe d'inertie maximale ou avec l'axe d'inertie minimale quelle que soit la capacité de formation de moment cinétique et de couple des volants d'inertie de l'engin spatial. Toutefois, le vecteur $J^{-1}(H_{TOT} \otimes J^{-1}H_{TOT})$ tend vers zéro à l'approche de l'axe principal d'inertie visé, de sorte que toute erreur sur la connaissance de la matrice d'inertie J peut se traduire par une nutation résiduelle autour dudit axe principal d'inertie visé. La loi de commande de type proportionnelle-intégrale, linéaire, permet d'assurer la convergence vers un axe X, proche de (dans la limite de la capacité des volants d'inertie) ou confondu avec l'axe principal d'inertie visé, et d'amortir la nutation jusqu'à une valeur nulle autour dudit axe X.

Dans des modes particuliers de mise en oeuvre, les consignes $h_Y$ et $h_Z$ du moment cinétique interne $H_{ACT}$ suivant les axes respectivement Y et Z sont reliées aux composantes respectivement r et q de la vitesse de rotation de l'engin spatial par les fonctions de transfert suivantes, exprimées dans le domaine de Laplace :

$$\begin{cases} h_Y = K_Z \left(1 + \dfrac{\omega_Z}{s}\right) r \\ h_Z = -K_Y \left(1 + \dfrac{\omega_Y}{s}\right) q \end{cases}$$

expressions dans lesquelles :

-   s est la variable de Laplace,
-   $K_Y$ et $K_Z$ sont des paramètres scalaires de même signe constants au cours du temps,
-   $\omega_Y$ et $\omega_Z$ sont des paramètres scalaires positifs constants au cours du temps.

Dans des modes particuliers de mise en oeuvre, l'étape d'alignement avec l'axe X est exécutée à moment cinétique total $H_{TOT}$ constant en repère inertiel.

Dans des modes particuliers de mise en oeuvre, l'étape d'alignement avec l'axe principal d'inertie est exécutée à moment cinétique total $H_{TOT}$ constant en repère inertiel.

Dans des modes particuliers de mise en oeuvre, le procédé de contrôle d'attitude comporte, après l'étape d'alignement avec l'axe principal d'inertie, une étape de modification du moment cinétique total $H_{TOT}$ en repère inertiel au moyen de propulseurs de l'engin spatial.

Dans des modes particuliers de mise en oeuvre, l'étape d'alignement avec l'axe principal d'inertie est exécutée avant toute modification du moment cinétique total $H_{TOT}$ en repère inertiel.

Selon un second aspect, l'invention concerne un produit programme d'ordinateur comportant un ensemble d'instructions de code de programme qui, lorsqu'elles sont exécutées par un processeur, mettent en oeuvre un procédé de contrôle d'attitude selon l'un quelconque des modes de mise en oeuvre de l'invention.

Selon un troisième aspect, l'invention concerne un système de contrôle d'attitude d'un engin spatial en rotation sur lui-même avec un moment cinétique total $H_{TOT}$ non nul, ledit engin spatial comportant un ensemble de volants d'inertie adaptés à former un moment cinétique interne $H_{ACT}$ d'axe quelconque dans un repère engin, ledit système de contrôle d'attitude comportant des moyens configurés pour mettre en oeuvre un procédé de contrôle d'attitude selon l'un quelconque des modes de mise en oeuvre de l'invention.

## PRÉSENTATION DES FIGURES

L'invention sera mieux comprise à la lecture de la description suivante, donnée à titre d'exemple nullement limitatif, et faite en se référant aux figures qui représentent :

- Figure 1 : une représentation schématique d'un satellite comportant un système de contrôle d'attitude,
- Figure 2 : un diagramme illustrant les principales étapes d'un mode particulier de mise en oeuvre d'un procédé de contrôle d'attitude,
- Figure 3 : un diagramme illustrant les principales étapes d'un mode préféré de mise en oeuvre d'un procédé de contrôle d'attitude,
- Figure 4 : des courbes illustrant les performances d'un procédé de contrôle d'attitude selon l'invention.

Dans ces figures, des références identiques d'une figure à une autre désignent des éléments identiques ou analogues. Pour des raisons de clarté des figures, les éléments représentés ne sont pas nécessairement à l'échelle, sauf mention contraire.

## DESCRIPTION DÉTAILLÉE DE MODES DE RÉALISATION

La présente invention concerne le contrôle d'attitude d'un engin spatial en rotation sur lui-même avec un moment cinétique total $H_{TOT}$ initial non nul. L'axe du moment cinétique total $H_{TOT}$ est désigné ci-après par « axe cinétique ».

Par « contrôle d'attitude », on entend ici modifier au moins l'orientation de l'engin spatial par rapport à l'axe cinétique, c'est-à-dire aligner, dans un repère associé à la géométrie de l'engin spatial, dit « repère engin », ledit axe cinétique avec un axe prédéterminé en repère engin.

Dans la suite de la description, on considère de manière non limitative le cas où l'engin spatial est un satellite 10 et où le moment cinétique total $H_{TOT}$ initial correspond au moment cinétique transféré audit satellite 10 lors de la séparation avec un lanceur dudit satellite. Par exemple, le satellite 10 a été placé en orbite GTO (« Geostationary Transfer Orbit ») par le lanceur et est destiné à effectuer sa mission en orbite GEO (« Geostationary Orbit »).

Rien n'exclut cependant, suivant d'autres exemples, de considérer d'autres types d'engins spatiaux (navette spatiale, sonde, etc.). En outre, l'invention est applicable de manière plus générale à tout engin spatial dont on souhaite modifier l'orientation de l'axe cinétique en repère engin et quelle que soit l'orbite en cours ou finale dudit engin spatial (LEO ou « Low Earth Orbit », MEO ou « Médium Earth Orbit », GTO, GEO, etc.).

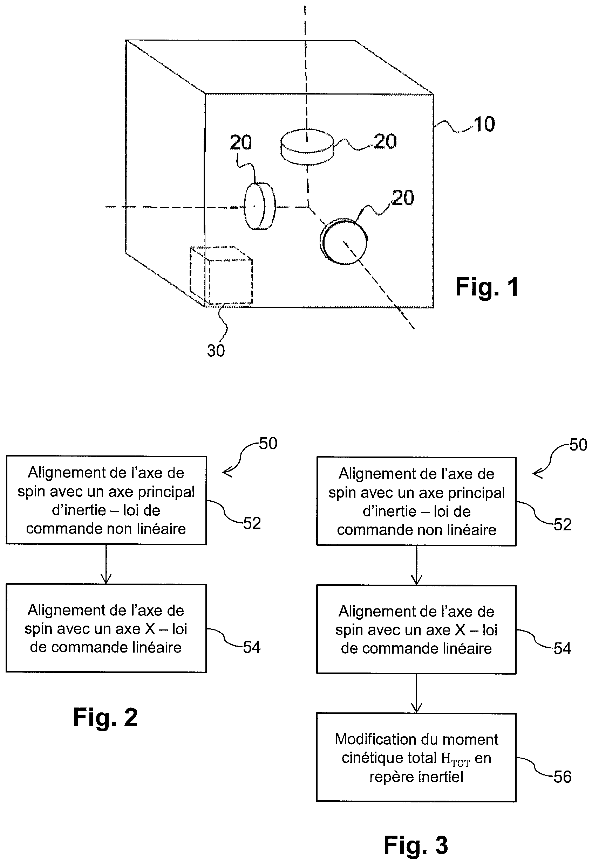

La figure 1 représente un mode particulier de réalisation d'un satellite 10 comportant un système de contrôle d'attitude. En pratique, le système de contrôle d'attitude peut comporter également d'autres éléments que ceux représentés sur la figure 1, qui sortent du cadre de l'invention.

Dans l'exemple non limitatif illustré par la figure 1, le système de contrôle d'attitude comporte un ensemble de volants d'inertie 20 adapté à former un moment cinétique interne $H_{ACT}$ d'axe quelconque en repère engin. Tel qu'illustré par la figure 1, le système de contrôle d'attitude comporte par exemple au moins trois volants d'inertie 20, tels que des roues de réaction et/ou des actionneurs gyroscopiques, adaptés à former un moment cinétique interne $H_{ACT}$ d'axe quelconque en repère engin. Par exemple, le système de contrôle d'attitude comporte trois roues de réaction d'axes de vecteurs unitaires respectifs linéairement indépendants.

Le système de contrôle d'attitude du satellite 10 comporte également un dispositif 30 de commande. Le dispositif 30 de commande contrôle l'attitude du satellite 10 et commande à cet effet, notamment, les volants d'inertie 20.

Le dispositif 30 de commande comporte par exemple au moins un processeur et au moins une mémoire électronique dans laquelle est mémorisé un produit programme d'ordinateur, sous la forme d'un ensemble d'instructions de code de programme à exécuter pour mettre en oeuvre les différentes étapes d'un procédé 50 de contrôle d'attitude du satellite 10. Dans une variante, le dispositif 30 de commande comporte également un ou des circuits logiques programmables, de type FPGA, PLD, etc., et/ou circuits intégrés spécialisés (ASIC) adaptés à mettre en oeuvre tout ou partie desdites étapes du procédé 50 de contrôle d'attitude du satellite 10. En d'autres termes, le dispositif 30 de commande comporte un ensemble de moyens configurés de façon logicielle (produit programme d'ordinateur spécifique) et/ou matérielle (FPGA, PLD, ASIC, etc.) pour mettre en oeuvre les différentes étapes d'un procédé 50 de contrôle d'attitude décrit ci-après.

Dans l'exemple illustré par la figure 1, le dispositif 30 de commande est embarqué dans le satellite 10. De manière plus générale, le dispositif 30 de commande peut être embarqué dans le satellite 10 ou dans un ou plusieurs équipements distants dudit satellite 10, notamment des équipements terrestres (les volants d'inertie 20 étant le cas échéant commandés à distance). Rien n'exclut en outre, suivant d'autres exemples, d'avoir un dispositif 30 de commande distribué entre le satellite 10 et un ou plusieurs autres équipements distants dudit satellite 10. Dans le cas où le dispositif 30 de commande est au moins partiellement embarqué dans un équipement distant du satellite 10, ledit équipement distant et le satellite 10 comportent des moyens conventionnels respectifs de communication à distance.

Dans son principe, un procédé 50 de contrôle d'attitude selon l'invention comporte principalement une étape 52 d'alignement de l'axe dudit moment cinétique total $H_{TOT}$ avec un axe principal d'inertie du satellite 10, qui met une loi de commande non linéaire. L'axe principal d'inertie visé est soit l'axe d'inertie maximale (« flat spin ») du satellite 10, soit l'axe d'inertie minimale dudit satellite 10.

Au cours de l'étape 52 d'alignement avec l'axe principal d'inertie, le dispositif 30 de commande pilote les volants d'inertie 20 de sorte à former un moment cinétique interne $H_{ACT}$ tel que l'expression suivante :

$$ H_{ACT} \times J^{-1}(H_{TOT} \otimes J^{-1} H_{TOT}) $$

est de signe constant pendant toute la durée de ladite étape 52 d'alignement avec l'axe principal d'inertie.

Dans l'expression précédente, J est la matrice d'inertie du satellite 10 en repère engin, l'opérateur $\times$ est le produit scalaire entre deux vecteurs et l'opérateur $\otimes$ est le produit vectoriel entre deux vecteurs. Plus particulièrement, les volants d'inertie 20 sont commandés de sorte que l'expression précédente :

- est négative pendant toute la durée de l'étape 52 d'alignement avec l'axe principal d'inertie si ledit axe principal d'inertie visé est l'axe d'inertie maximale du satellite 10,
- est positive pendant toute la durée de l'étape 52 d'alignement avec l'axe principal d'inertie si ledit axe principal d'inertie visé est l'axe d'inertie minimale du satellite 10.

Le signe de l'expression $H_{ACT} \times J^{-1}(H_{TOT} \otimes J^{-1} H_{TOT})$ est entièrement déterminé par la direction et le sens du moment cinétique interne $H_{ACT}$, et est indépendant du module dudit moment cinétique interne $H_{ACT}$. Par conséquent, le procédé 50 de contrôle d'attitude peut être mis en oeuvre y compris lorsque le moment cinétique total $H_{TOT}$ initial est supérieur à la capacité d'absorption des volants d'inertie de l'engin spatial. En d'autres termes, on peut toujours assurer que le moment cinétique interne $H_{ACT}$, à former au cours de l'étape 52 d'alignement avec l'axe principal d'inertie, respecte la capacité maximale de formation de moment cinétique et de couple des volants d'inertie 20.

Le système de contrôle d'attitude comporte par exemple un dispositif de mesure (non représenté sur les figures) adapté à mesurer la vitesse de rotation inertielle du satellite 10, à partir de laquelle le dispositif 30 de commande peut déterminer de manière conventionnelle le moment cinétique total $H_{TOT}$ initial du satellite 10.

Ensuite, le dispositif 30 de commande détermine par exemple les composantes du moment cinétique total $H_{TOT}$ dans le repère engin à l'instant considéré, et en déduit les conditions que le moment cinétique interne $H_{ACT}$ à former doit vérifier pour assurer que le signe de l'expression $H_{ACT} \times J^{-1}(H_{TOT} \otimes J^{-1} H_{TOT})$ est négatif si l'axe principal d'inertie visé est l'axe d'inertie maximale, positif si l'axe principal d'inertie visé est l'axe d'inertie minimale. Le dispositif 30 de commande détermine alors une consigne adaptée de moment cinétique interne $H_{ACT}$, ainsi qu'une commande correspondante de couple à former par lesdits volants d'inertie 20 pour obtenir ladite consigne du moment cinétique interne $H_{ACT}$. La valeur réelle du moment cinétique interne $H_{ACT}$ est par exemple déterminée au moyen de mesures des vitesses de rotation respectives des volants d'inertie 20, et l'écart entre la valeur réelle et la consigne du moment cinétique interne $H_{ACT}$ est par exemple utilisé, de manière conventionnelle, pour actualiser les commandes de couple à former par lesdits volants d'inertie 20. Ces différentes étapes sont itérées au cours du temps afin de tenir compte de la rotation du satellite 10 (et des variations des composantes du moment cinétique total $H_{TOT}$ dans le repère engin) pour assurer que le signe de l'expression $H_{ACT} \times J^{-1}(H_{TOT} \otimes J^{-1} H_{TOT})$ reste constant pendant toute la durée de l'étape 52 d'alignement de l'axe cinétique avec l'axe principal d'inertie visé.

Tel qu'indiqué précédemment, la direction du vecteur $J^{-1}(H_{TOT} \otimes J^{-1} H_{TOT})$ est la direction optimale pour avoir la convergence la plus rapide vers l'axe principal d'inertie visé.

Dans des modes préférés de mise en oeuvre, les volants d'inertie 20 sont donc commandés de sorte à former un moment cinétique interne $H_{ACT}$ dont la direction, pendant toute la durée de l'étape 52 d'alignement avec l'axe principal d'inertie, n'est pas trop éloignée de celle du vecteur $J^{-1}(H_{TOT} \otimes J^{-1} H_{TOT})$. Plus particulièrement, les volants d'inertie 20 sont commandés de sorte que la valeur absolue du cosinus d'un angle $\theta$ entre ledit

moment cinétique interne $H_{ACT}$ et le vecteur $J^{-1}(H_{TOT} \otimes J^{-1}H_{TOT})$ est, pendant toute la durée de l'étape 52 d'alignement avec l'axe principal d'inertie, supérieure à 0.9 ($|\cos\theta| > 0.9$), voire supérieure à 0.98 ($|\cos\theta| > 0.98$).

De préférence, les volants d'inertie 20 sont commandés, pendant toute la durée de l'étape 52 d'alignement avec l'axe principal d'inertie, de sorte à former un moment cinétique interne $H_{ACT}$ sensiblement de même direction que celle du vecteur $J^{-1}(H_{TOT} \otimes J^{-1}H_{TOT})$ :

$$H_{ACT} = K_V U$$

expression dans laquelle Kv est un paramètre scalaire et U correspond à la direction du vecteur $J^{-1}(H_{TOT} \otimes J^{-1}H_{TOT})$ :

$$U = \frac{J^{-1}(H_{TOT} \otimes J^{-1}H_{TOT})}{\|J^{-1}(H_{TOT} \otimes J^{-1}H_{TOT})\|}$$

Le paramètre scalaire Kv est soit négatif si l'axe principal d'inertie visé est l'axe d'inertie maximale du satellite 10, soit positif si ledit axe principal d'inertie visé est l'axe d'inertie minimale dudit satellite 10.

Le paramètre scalaire Kv est constant ou variable au cours du temps, et sa valeur est déterminée de sorte à assurer que le moment cinétique interne $H_{ACT}$, à former au cours de l'étape 52 d'alignement avec l'axe principal d'inertie, respecte toujours la capacité maximale de formation de moment cinétique et de couple des volants d'inertie 20. Par exemple, la valeur du paramètre scalaire Kv vérifie les expressions suivantes :

$$|K_V| \leq \frac{Tmax}{\|\dot{U}\|}$$

$$|K_V| \leq Hmax$$

expressions dans lesquelles :

- Tmax correspond à la capacité maximale de formation de couple des volants d'inertie 20,
- $\dot{U}$ correspond à la dérivée temporelle de la direction U du vecteur $J^{-1}(H_{TOT} \otimes J^{-1}H_{TOT})$,
- Hmax correspond à la capacité maximale de formation de moment cinétique des volants d'inertie 20.

La valeur du paramètre du paramètre scalaire Kv peut également être limitée lorsque la direction du moment cinétique total $H_{TOT}$ se rapproche de l'axe principal d'inertie. Par exemple, lorsque l'angle $\varphi$ entre la direction du moment cinétique total $H_{TOT}$ et l'axe principal d'inertie devient inférieur à 15°, il est possible d'appliquer un facteur $\sin\varphi/\sin(15°)$ qui décroît progressivement à mesure que l'angle $\varphi$ diminue.

La figure 2 représente un mode préféré de mise en oeuvre d'un procédé 50 de contrôle d'attitude du satellite 10.

Tel qu'illustré par la figure 2, le procédé 50 de contrôle d'attitude illustré comporte, après l'étape 52 d'alignement avec l'axe principal d'inertie visé (axe d'inertie maximale ou axe d'inertie minimale), une étape 54 d'alignement de l'axe cinétique avec un axe X prédéterminé en repère engin, au cours de laquelle on utilise une loi de commande différente de celle utilisée au cours de l'étape 52 d'alignement avec l'axe principal d'inertie visé, en l'occurrence une loi de commande linéaire de type proportionnelle-intégrale.

Plus particulièrement, au cours de l'étape 54 d'alignement avec l'axe X, les volants d'inertie 20 sont commandés de sorte à asservir les composantes du moment cinétique interne $H_{ACT}$ suivant des axes Y, Z, transverses à l'axe X et formant avec celui-ci un repère engin particulier, sur des consignes respectivement $h_Y$ et $h_z$ déterminées en fonction des composantes de la vitesse de rotation inertielle du satellite 10 suivant lesdits axes Y, Z :

- la consigne $h_Y$ du moment cinétique interne $H_{ACT}$ suivant l'axe Y est déterminée suivant une loi de commande de type proportionnelle-intégrale à partir de la composante r de la vitesse de rotation suivant l'axe Z,
- la consigne hz du moment cinétique interne $H_{ACT}$ suivant l'axe Z est déterminée suivant une loi de commande de type proportionnelle-intégrale à partir de la composante q de la vitesse de rotation suivant l'axe Y.

Tel qu'illustré par la figure 2, l'axe X visé est de préférence confondu avec l'axe principal d'inertie visé, auquel cas la loi de commande de type proportionnelle-intégrale permet d'amortir la nutation jusqu'à une valeur nulle autour dudit axe principal d'inertie visé. Toutefois, la loi de commande de type proportionnelle-intégrale permet également d'assurer la convergence, à partir d'un axe cinétique sensiblement aligné avec l'axe principal d'inertie visé, vers un axe X distinct dudit axe principal d'inertie, et d'amortir la nutation jusqu'à une valeur nulle autour dudit axe X. Le cas échéant, l'axe X doit cependant être suffisamment proche de l'axe principal d'inertie pour que l'alignement de l'axe cinétique avec ledit axe X puisse être effectué au moyen des volants d'inertie 20. L'axe X peut être considéré comme suffisamment proche de l'axe principal d'inertie lorsque les produits d'inertie $I_{XY}$ et $I_{XZ}$ avec l'axe X vérifient les expressions suivantes :

$$\frac{|I_{XY}| \cdot \|H_{TOT}\|}{I_X} < \|Hmax\|$$

$$\frac{|I_{XZ}| \cdot \|H_{TOT}\|}{I_X} < \|Hmax\|$$

expressions dans lesquelles $I_X$ correspond à l'inertie suivant l'axe X. Toutefois, il est préférable de prévoir une marge supplémentaire pour assurer que l'alignement de l'axe cinétique avec ledit axe X puisse effectivement être effectué au moyen des volants d'inertie 20 :

$$\frac{|I_{XY}| \cdot \|H_{TOT}\|}{I_X} < \frac{\|Hmax\|}{\rho}$$

$$\frac{|I_{XZ}| \cdot \|H_{TOT}\|}{I_X} < \frac{\|Hmax\|}{\rho}$$

expressions dans lesquelles $\rho$ correspond à un facteur prédéfini supérieur à un ($\rho > 1$), par exemple égal à deux ($\rho = 2$).

Dans des modes particuliers de mise en oeuvre, les consignes $h_Y$ et $h_z$ du moment cinétique interne $H_{ACT}$ suivant les axes respectivement Y et Z sont reliées aux composantes respectivement r et q de la vitesse de rotation du satellite 10 par les fonctions de transfert suivantes, exprimées dans le domaine de Laplace :

$$\begin{cases} h_Y = K_Z\left(1 + \frac{\omega_Z}{s}\right)r \\ h_Z = -K_Y\left(1 + \frac{\omega_Y}{s}\right)q \end{cases}$$

expressions dans lesquelles :

- s est la variable de Laplace,
- $K_Y$ et $K_Z$ sont des paramètres scalaires sans dimension de même signe constants au cours du temps,
- $\omega_Y$ et $\omega_Z$ sont des paramètres scalaires positifs, homogènes à des pulsations ($s^{-1}$), constants au cours du temps.

L'utilisation du domaine de Laplace dans le domaine des systèmes d'asservissement est tout à fait conventionnelle et considérée comme connue de l'homme de l'art. En outre, l'ajustement des paramètres scalaires $K_Y$, $K_Z$, $\omega_Y$ et $\omega_Z$, étant données les expressions ci-dessus des consignes $h_Y$ et $h_Z$ du moment cinétique interne $H_{ACT}$, est considéré à la portée de l'homme de l'art.

Tel qu'indiqué précédemment, le procédé 50 de contrôle d'attitude permet d'aligner l'axe cinétique avec un axe principal d'inertie (axe d'inertie maximale ou axe d'inertie minimale) quelle que soit la capacité de formation de moment cinétique et de couple des volants d'inertie 20 du satellite 10.

Par conséquent, l'étape 52 d'alignement de l'axe cinétique avec l'axe principal d'inertie visé peut être exécutée avant toute modification du moment cinétique total $H_{TOT}$ en repère inertiel. De même, l'étape 54 d'alignement de l'axe cinétique avec un axe X confondu avec l'axe principal d'inertie visé ou proche de celui-ci, peut également être exécutée avant toute modification du moment cinétique total $H_{TOT}$ en repère inertiel. Rien n'exclut cependant, suivant d'autres exemples, de modifier le moment cinétique total $H_{TOT}$ avant et/ou pendant d'aligner l'axe cinétique avec un axe prédéterminé en repère engin.

La figure 3 représente un mode préféré de mise en oeuvre d'un procédé 50 de contrôle d'attitude du satellite 10. Tel qu'illustré par la figure 3, le procédé 50 de contrôle d'attitude comporte, après l'étape 52 d'alignement avec l'axe principal d'inertie visé, une étape 56 de modification du moment cinétique total $H_{TOT}$ en repère inertiel au moyen de propulseurs (non représentés sur les figures) du satellite 10, commandés par le dispositif 30 de commande. L'étape 56 de modification du moment cinétique total $H_{TOT}$ au moyen de propulseurs du satellite 10 est conventionnelle et est considérée comme connue de l'homme de l'art. Par exemple, l'étape 56 de modification du moment cinétique total $H_{TOT}$ peut comporter la réduction dudit moment cinétique total HTOT jusqu'à ce qu'il soit dans la capacité d'absorption des volants d'inertie 20.

Dans l'exemple non limitatif illustré par la figure 3, le procédé 50 de contrôle d'attitude comporte également l'étape 54 d'alignement avec un axe X, qui met en oeuvre une loi de commande linéaire pour amortir la nutation, qui est par exemple également exécutée avant l'étape 56 de modification du moment cinétique total $H_{TOT}$ en repère inertiel. Dans l'exemple illustré par la figure 3, l'axe X est considéré confondu avec l'axe principal d'inertie visé.

De préférence, les propulseurs utilisés au cours de l'étape 56 de modification du moment cinétique total $H_{TOT}$ sont des propulseurs électriques. Avantageusement, l'axe principal d'inertie visé (ou, le cas échéant, l'axe X visé) est un axe suivant lequel le satellite 10 peut assurer son autonomie électrique au moyen de générateurs solaires (non représentés sur les figures), de sorte qu'il est possible d'utiliser des propulseurs électriques pour modifier le moment cinétique total $H_{TOT}$ en repère inertiel.

Dans la suite de la description, on se place de manière non limitative, à titre d'exemple, dans le cas où les générateurs solaires du satellite 10 sont mobiles en rotation autour d'un axe de rotation sensiblement orthogonal à l'axe d'inertie maximale dudit satellite 10 (ce sera généralement le cas si les générateurs solaires sont agencés de part et d'autre d'un corps dudit satellite 10). L'orientation desdits générateurs solaires autour de l'axe de rotation est commandée au moyen de mécanismes d'entraînement. Dans ce cas, l'axe principal d'inertie visé au cours de l'étape 52 d'alignement (et, le cas échéant, l'axe X visé au cours de l'étape 54 d'alignement) correspond à l'axe d'inertie maximale dudit satellite 10. A l'issue de cette étape, l'axe cinétique est donc sensiblement orthogonal à l'axe de rotation des générateurs solaires. On peut montrer qu'il est alors toujours possible de trouver une orientation des générateurs solaires permettant d'assurer que l'ensoleillement moyen de surfaces photosensibles desdits générateurs solaires, sur la durée d'une rotation complète du satellite 10 sur lui-même, est supérieur à une valeur seuil prédéfinie, par exemple supérieur à 30%. En plaçant les générateurs solaires dans une telle orientation, il est alors possible d'assurer l'autonomie électrique du satellite 10, de sorte que des propulseurs électriques peuvent être mis en oeuvre pour modifier le moment cinétique total $H_{TOT}$ du satellite 10.

La description ci-avant illustre clairement que par ses différentes caractéristiques et leurs avantages, la présente invention atteint les objectifs qu'elle s'était fixés. En particulier, l'invention permet de modifier l'orientation d'un satellite 10 par rapport à un axe cinétique au moyen uniquement de volants d'inertie 20, y compris lorsque le moment cinétique total $H_{TOT}$ initial est supérieur à la capacité d'absorption desdits volants d'inertie 20, grâce à une loi de commande non linéaire.

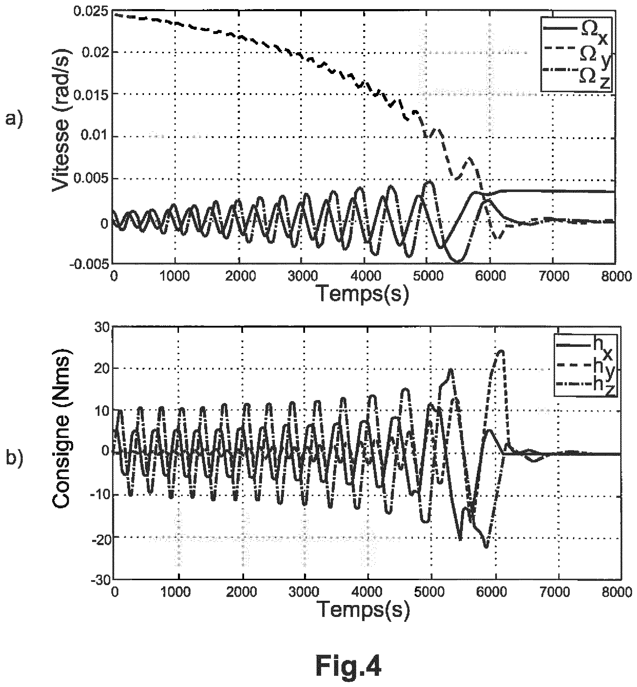

La figure 4 représente des résultats de simulation illustrant les performances d'un procédé 50 de contrôle d'attitude selon l'invention au cours de l'étape 52 d'alignement de l'axe du moment cinétique total $H_{TOT}$ avec l'axe principal d'inertie d'un satellite 10. Les inerties du satellite 10 considéré sont les suivantes :

- $I_X$ = 70000 kg·m$^2$,
- $I_Y$ = 10000 kg·m$^2$,
- $I_Z$ = 50000 kg·m$^2$.

de sorte que l'axe principal d'inertie dudit satellite 10 est sensiblement l'axe X.

En outre, la capacité maximale Hmax en moment cinétique des volants d'inertie 20 du satellite 10 considéré est égale à 25 N·m·s, et la capacité maximale Tmax en couple est égale à 0.2 N·m.

La partie a) de la figure 4 représente les vitesses de rotation $\Omega_X$, $\Omega_Y$, $\Omega_Z$ (exprimées en rad/s) du satellite 10. On constate que le moment cinétique total $H_{TOT}$ initial est proche de l'axe Y. En outre, le moment cinétique total $H_{TOT}$ initial considéré est de 250 N·m·s, de sorte qu'il est très supérieur à la capacité maximale Hmax en moment cinétique des volants d'inertie 20 du satellite 10.

La partie b) de la figure 4 représente les consignes $h_X$, $h_Y$, $h_Z$ du moment cinétique interne $H_{ACT}$ au cours de l'étape 52 d'alignement.

Tel qu'illustré par la partie a) de la figure 4, l'axe du moment cinétique total $H_{TOT}$ converge bien vers l'axe X du satellite 10, et sans que le moment cinétique interne $H_{ACT}$ ne dépasse la capacité maximale Hmax de formation de moment cinétique des volants d'inertie 20 du satellite 10, comme le montre la partie b) de la figure 4.

## Revendications

1. Procédé (50) de contrôle d'attitude d'un engin spatial (10) en rotation sur lui-même avec un moment cinétique total $H_{TOT}$ non nul, ledit engin spatial (10) comportant un ensemble de volants d'inertie (20) adaptés à former un moment cinétique interne $H_{ACT}$ d'axe quelconque dans un repère engin, ledit procédé comportant une étape (52) d'alignement de l'axe dudit moment cinétique total $H_{TOT}$ avec un axe principal d'inertie de l'engin spatial (10) au cours de laquelle les volants d'inertie (20) sont commandés de sorte à former un moment cinétique interne $H_{ACT}$ tel que l'expression suivante :

$$H_{ACT} \times J^{-1}(H_{TOT} \otimes J^{-1}H_{TOT})$$

- est négative pendant toute la durée de l'étape (52) d'alignement avec l'axe principal d'inertie si ledit axe principal d'inertie visé est l'axe d'inertie maximale de l'engin spatial (10),
- est positive pendant toute la durée de l'étape (52) d'alignement avec l'axe principal d'inertie si ledit axe principal d'inertie visé est l'axe d'inertie minimale de l'engin spatial (10),

expression dans laquelle J est la matrice d'inertie de l'engin spatial (10), l'opérateur $\times$ est le produit scalaire entre deux vecteurs et l'opérateur $\otimes$ est le produit vectoriel entre deux vecteurs, ledit procédé (50) étant **caractérisé en ce que** les volants d'inertie (20) sont commandés de sorte à former un moment cinétique interne $H_{ACT}$ pour lequel un angle θ entre ledit moment cinétique interne $H_{ACT}$ et le vecteur $J^{-1}(H_{TOT} \otimes J^{-1}H_{TOT})$ vérifie, pendant toute la durée de l'étape (52) d'alignement avec l'axe principal d'inertie, l'expression suivante :

$$|cos\theta| > 0.9$$

2. Procédé (50) selon la revendication 1, dans lequel les volants d'inertie (20) sont commandés, pendant toute la durée de l'étape (52) d'alignement avec l'axe principal d'inertie, de sorte à former un moment cinétique interne $H_{ACT}$ :

$$H_{ACT} = K_V \cdot U$$

expression dans laquelle Kv est un paramètre scalaire négatif si l'axe principal d'inertie visé est l'axe d'inertie maximale de l'engin spatial (10) ou positif si ledit axe principal d'inertie visé est l'axe d'inertie minimale dudit engin spatial, et U correspond au vecteur unitaire :

**8**

$$U = \frac{J^{-1}(H_{TOT} \otimes J^{-1}H_{TOT})}{\|J^{-1}(H_{TOT} \otimes J^{-1}H_{TOT})\|}$$

**3.** Procédé (50) selon l'une des revendications précédentes, comportant, après l'étape (52) d'alignement avec l'axe principal d'inertie, une étape (54) d'alignement avec un axe X prédéterminé en repère engin, au cours de laquelle les volants d'inertie (20) sont commandés de sorte à asservir les composantes du moment cinétique interne $H_{ACT}$ suivant des axes Y, Z, transverses à l'axe X, sur des consignes respectivement $h_Y$ et $h_Z$ déterminées en fonction des composantes de la vitesse de rotation de l'engin spatial (10) suivant lesdits axes Y, Z :

- la consigne $h_Y$ du moment cinétique interne $H_{ACT}$ suivant l'axe Y est déterminée suivant une loi de commande de type proportionnelle-intégrale à partir de la composante r de la vitesse de rotation suivant l'axe Z,
- la consigne $h_Z$ du moment cinétique interne $H_{ACT}$ suivant l'axe Z est déterminée suivant une loi de commande de type proportionnelle-intégrale à partir de la composante q de la vitesse de rotation suivant l'axe Y.

**4.** Procédé (50) selon la revendication 3, dans lequel les consignes $h_Y$ et $h_Z$ du moment cinétique interne $H_{ACT}$ suivant les axes respectivement Y et Z sont reliées aux composantes respectivement r et q de la vitesse de rotation par les fonctions de transfert suivantes, exprimées dans le domaine de Laplace :

$$\begin{cases} h_Y = K_Z \left(1 + \dfrac{\omega_Z}{s}\right) r \\ h_Z = -K_Y \left(1 + \dfrac{\omega_Y}{s}\right) q \end{cases}$$

expressions dans lesquelles :

- s est la variable de Laplace,
- $K_Y$ et $K_Z$ sont des paramètres scalaires de même signe constants au cours du temps,
- $\omega_Y$ et $\omega_Z$ sont des paramètres scalaires positifs constants au cours du temps.

**5.** Procédé (50) selon l'une des revendications 3 à 4, dans lequel l'étape (54) d'alignement avec l'axe X est exécutée à moment cinétique total $H_{TOT}$ constant en repère inertiel.

**6.** Procédé (50) selon l'une des revendications précédentes, dans lequel l'étape (52) d'alignement avec l'axe principal d'inertie est exécutée à moment cinétique total $H_{TOT}$ constant en repère inertiel.

**7.** Procédé (50) selon l'une des revendications précédentes, comportant, après l'étape (52) d'alignement avec l'axe principal d'inertie, une étape (56) de modification du moment cinétique total $H_{TOT}$ en repère inertiel au moyen de propulseurs de l'engin spatial (10).

**8.** Produit programme d'ordinateur **caractérisé en ce qu'**il comporte un ensemble d'instructions de code de programme qui, lorsqu'elles sont exécutées par un processeur, mettent en oeuvre un procédé (50) de contrôle d'attitude selon l'une des revendications précédentes.

**9.** Système de contrôle d'attitude d'un engin spatial (10) en rotation sur lui-même avec un moment cinétique total $H_{TOT}$ non nul, ledit engin spatial comportant un ensemble de volants d'inertie (20) adaptés à former un moment cinétique interne $H_{ACT}$ d'axe quelconque dans un repère engin, **caractérisé en ce qu'**il comporte des moyens configurés pour commander les volants d'inertie (20) conformément à l'une des revendications 1 à 7.

**Patentansprüche**

**1.** Verfahren (50) zur Steuerung der Stellung eines Raumfahrzeugs (10), das sich mit einem Gesamtdrehimpuls $H_{TOT}$ ungleich null um sich selbst dreht, wobei das Raumfahrzeug (10) einen Satz an Schwungrädern (20) beinhaltet, die ausgeführt sind, um einen internen Drehimpuls $H_{ACT}$ irgendeiner Achse in einem Fahrzeugbezugspunkt zu bilden, wobei das Verfahren einen Schritt (52) zum Ausrichten der Achse des Gesamtdrehimpulses $H_{TOT}$ mit einer Hauptträgheitsachse des Raumfahrzeugs (10) beinhaltet, im Laufe dessen die Schwungräder (20) derart gesteuert werden, um einen internen Drehimpuls $H_{ACT}$ zu bilden, sodass der folgende Ausdruck:

$$H_{ACT} \; X \; J^{-1}(H_{TOT} \; \otimes \; J^{-1} \; H_{TOT})$$

- während der gesamten Dauer des Schrittes (52) zum Ausrichten mit der Hauptträgheitsachse negativ ist, falls die angestrebte Hauptträgheitsachse die maximale Trägheitsachse des Raumfahrzeugs (10) ist,
- während der gesamten Dauer des Schrittes (52) zum Ausrichten mit der Hauptträgheitsachse positiv ist, falls die angestrebte Hauptträgheitsachse die minimale Trägheitsachse des Raumfahrzeugs (10) ist,

Ausdruck, in dem J die Trägheitsmatrix des Raumfahrzeugs (10) ist, der Operator X das Skalarprodukt zwischen zwei Vektoren ist und der Operator $\otimes$ das

Vektorprodukt zwischen zwei Vektoren ist, wobei das Verfahren (50) **dadurch gekennzeichnet ist, dass** die Schwungräder (20) derart gesteuert werden, um einen internen Drehimpuls $H_{ACT}$ zu bilden, bei dem ein Winkel $\theta$ zwischen dem internen Drehimpuls $H_{ACT}$ und dem Vektor $J^{-1}(H_{TOT} \otimes J^{-1} H_{TOT})$ während der gesamten Dauer des Schrittes (52) zum Ausrichten mit der Hauptträgheitsachse den folgenden Ausdruck überprüft:

$$|\cos \theta| > 0.9$$

2.　Verfahren (50) nach Anspruch 1, wobei die Schwungräder (20) während der gesamten Dauer des Schrittes (52) zum Ausrichten mit der Hauptträgheitsachse derart gesteuert werden, um einen internen Drehimpuls $H_{ACT}$ zu bilden:

$$H_{ACT} = K_V \cdot U$$

Ausdruck, in dem $K_V$ ein negativer Skalarparameter ist, falls die angestrebte Hauptträgheitsachse die maximale Trägheitsachse des Raumfahrzeugs (10) ist, oder ein positiver, falls die angestrebte Hauptträgheitsachse die minimale Trägheitsachse des Raumfahrzeugs ist, und U dem Einheitsvektor entspricht:

$$U = \frac{J^{-1}(H_{TOT} \otimes J^{-1}H_{TOT})}{\|J^{-1}(H_{TOT} \otimes J^{-1}H_{TOT})\|}$$

3.　Verfahren (50) nach einem der vorstehenden Ansprüche, nach dem Schritt (52) zum Ausrichten mit der Hauptträgheitsachse einen Schritt (54) zum Ausrichten mit einer im Fahrzeugbezugspunkt vorbestimmten Achse X beinhaltend, im Laufe dessen die Schwungräder (20) derart gesteuert sind, um die Komponenten des internen Drehimpulses $H_{ACT}$ entlang der zu der Achse X senkrechten Achsen Y, Z auf den Vorgaben von jeweils $h_Y$ und $h_Z$ anzusteuern, die in Abhängigkeit von den Komponenten der Drehgeschwindigkeit des Raumfahrzeuges (10) entlang der Achsen Y, Z bestimmt werden:

　　- die Vorgabe hy des internen Drehimpulses $H_{ACT}$ entlang der Achse Y wird entsprechend einem Steuerungsgesetz des Typs proportional-integral ausgehend von der Komponente r der Drehgeschwindigkeit entlang der Achse Z bestimmt,
　　- die Vorgabe hz des internen Drehimpulses $H_{ACT}$ entlang der Achse Z wird entsprechend einem Steuerungsgesetz des Typs proportional-integral ausgehend von der Komponente q der Drehgeschwindigkeit entlang der Achse Y bestimmt.

4.　Verfahren (50) nach Anspruch 3, wobei die Vorgaben $h_Y$ und $h_Z$ des internen Drehimpulses $H_{ACT}$ entlang jeweils der Achsen Y und Z mit jeweils den Komponenten r und q der Drehgeschwindigkeit durch die folgenden Transferfunktionen verbunden werden, die in der Laplace-Domäne ausgedrückt werden:

$$\begin{cases} h_Y = K_Z \left(1 + \dfrac{\omega_Z}{s}\right) r \\ h_Z = -K_Y \left(1 + \dfrac{\omega_Y}{s}\right) q \end{cases}$$

Ausdrücke, in denen:

　　- s die Laplace-Variable ist,
　　- $K_Y$ und $K_Z$ konstante Skalarparameter mit demselben Vorzeichen im Laufe der Zeit sind,
　　- $\omega_Y$ und $\omega_Z$ konstante positive Skalarparameter im Laufe der Zeit sind.

5.　Verfahren (50) nach einem der Ansprüche 3 bis 4, wobei der Schritt (54) zum Ausrichten mit der Achse X mit konstantem Gesamtdrehimpuls $H_{TOT}$ als Trägheitsbezugspunkt ausgeführt wird.

6.　Verfahren (50) nach einem der vorstehenden Ansprüche, wobei der Schritt (52) zum Ausrichten mit der Hauptträgheitsachse mit konstantem Gesamtdrehimpuls $H_{TOT}$ als Trägheitsbezugspunkt ausgeführt wird.

7.　Verfahren (50) nach einem der vorstehenden Ansprüche, nach dem Schritt (52) des Ausrichtens mit der Hauptträgheitsachse einen Schritt (56) zum Ändern des Gesamtdrehimpulses $H_{TOT}$ als Trägheitsbezugspunkt anhand von Triebwerken des Raumfahrzeugs (10) beinhaltend.

8.　Computerprogrammprodukt, **dadurch gekennzeichnet, dass** es eine Reihe von Programmcodebefehlen beinhaltet, die, wenn sie durch einen Prozessor ausgeführt werden, ein Verfahren (50) zur Steuerung einer Stellung nach einem der vorstehenden Ansprüche anwenden.

9.　System zur Steuerung der Stellung eines Raumfahrzeugs (10), das sich mit einem Gesamtdrehimpuls $H_{TOT}$ ungleich null um sich selbst dreht, wobei das Raumfahrzeug einen Satz an Schwungrädern (20) beinhaltet, die ausgeführt sind, um einen internen Drehimpuls $H_{ACT}$ irgendeiner Achse in einem Fahrzeugbezugspunkt zu bilden, **dadurch gekennzeichnet, dass** es Mittel beinhaltet, die konfiguriert sind, um die Schwungräder (20) nach einem der Ansprüche 1 bis 7 zu steuern.

**Claims**

1. An attitude control method (50) for a spacecraft (10) rotating on itself with a non zero total angular momentum $H_{TOT}$, said spacecraft (10) comprising a set of inertia flywheels (20) adapted to form an internal angular momentum $H_{ACT}$ of any axis in a craft reference frame, said method comprising a step (52) of alignment of the axis of said total angular momentum $H_{TOT}$ with a principal axis of inertia of the spacecraft (10), during which step of alignment with the principal axis of inertia, the inertia flywheels (20) are controlled so as to form an internal angular momentum $H_{ACT}$ such that the following expression:

$$H_{ACT} \times J^{-1}(H_{TOT} \otimes J^{-1}H_{TOT})$$

- is negative throughout the duration of the step (52) of alignment with the principal axis of inertia if said targeted principal axis of inertia is the axis of maximum inertia of the spacecraft (10),
- is positive throughout the duration of the step (52) of alignment with the principal axis of inertia if said targeted principal axis of inertia is the axis of minimum inertia of the spacecraft (10),

expression in which J is the inertia matrix of the spacecraft (10), the operator $\times$ is the scalar product between two vectors and the operator $\otimes$ is the vector product between two vectors, said method being **characterized in that** the inertia flywheels (20) are controlled so as to form an internal angular momentum $H_{ACT}$ for which an angle $\theta$ between said internal angular momentum $H_{ACT}$ and the vector $J^{-1}(H_{TOT} \otimes J^{-1}H_{TOT})$ satisfies, throughout the duration of the step (52) of alignment with the principal axis of inertia, the following expression:

$$|\cos\theta| > 0.9$$

2. The method (50) as claimed in claim 1, in which the inertia flywheels (20) are controlled, throughout the duration of the step (52) of alignment with the principal axis of inertia, so as to form an internal angular momentum $H_{ACT}$:

$$H_{ACT} = K_V \cdot U$$

expression in which Kv is a scalar parameter that is negative if the targeted principal axis of inertia is the axis of maximum inertia of the spacecraft (10) or positive if said targeted principal axis of inertia is the axis of minimum inertia of said spacecraft, and U corresponds to the unitary vector:

$$U = \frac{J^{-1}(H_{TOT} \otimes J^{-1}H_{TOT})}{\|J^{-1}(H_{TOT} \otimes J^{-1}H_{TOT})\|}$$

3. The method (50) as claimed in one of the preceding claims, comprising, after the step (52) of alignment with the principal axis of inertia, a step (54) of alignment with a predetermined axis X in the craft reference frame, during which the inertia flywheels (20) are controlled so as to lock the components of the internal angular momentum $H_{ACT}$ according to axes Y, Z, transverse to the axis X, on to setpoints respectively $h_Y$ and $h_Z$ determined as a function of the components of the speed of rotation of the spacecraft (10) according to said axes Y, Z:

- the setpoint $h_Y$ of the internal angular momentum $H_{ACT}$ according to the axis Y is determined according to a control law of proportional-integral type from the component r of the speed of rotation according to the axis Z,
- the setpoint hz of the internal angular momentum $H_{ACT}$ according to the axis Z is determined according to a control law of proportional-integral type from the component q of the speed of rotation according to the axis Y.

4. The method (50) as claimed in claim 3, in which the setpoints $h_Y$ and $h_Z$ of the internal angular momentum $H_{ACT}$ according to the axes respectively Y and Z are linked to the components respectively r and q of the speed of rotation by the following transfer functions, expressed in the Laplace domain:

$$\begin{cases} h_Y = K_Z \left(1 + \dfrac{\omega_Z}{s}\right) r \\ h_Z = -K_Y \left(1 + \dfrac{\omega_Y}{s}\right) q \end{cases}$$

expressions in which:

- s is the Laplace variable,
- $K_Y$ and Kz are scalar parameters of the same sign that are constant over time,
- $\omega_Y$ and $\omega_Z$ are positive scalar parameters that are constant over time.

5. The method (50) as claimed in one of claims 3 and 4, in which the step (54) of alignment with the axis X is executed with total angular momentum $H_{TOT}$ that is constant in inertial reference frame.

6. The method (50) as claimed in one of the preceding claims, in which the step (52) of alignment with the principal axis of inertia is executed with total angular momentum HTOT that is constant in inertial reference frame.

7. The method (50) as claimed in one of the preceding claims, comprising, after the step (52) of alignment with the principal axis of inertia, a step (56) of modification of the total angular momentum $H_{TOT}$ in inertial reference frame by means of thrusters of the spacecraft (10).

8. A computer program product, **characterized in that** it comprises a set of program code instructions which, when they are executed by a processor, implement an attitude control method (50) as claimed in one of the preceding claims.

9. An attitude control system for a spacecraft (10) rotating on itself with a non zero total angular momentum $H_{TOT}$, said spacecraft comprising a set of inertia flywheels (20) adapted to form an internal angular momentum $H_{ACT}$ of any axis in a craft reference frame, **characterized in that** it comprises means configured to control the inertia flywheels (20) in accordance with one of claims 1 to 7.

**Fig. 1**

10

20      20

20

30

50

Alignement de l'axe de
spin avec un axe principal
d'inertie – loi de
commande non linéaire

52

Alignement de l'axe de
spin avec un axe X – loi
de commande linéaire

54

**Fig. 2**

50

Alignement de l'axe de
spin avec un axe principal
d'inertie – loi de
commande non linéaire

52

Alignement de l'axe de
spin avec un axe X – loi
de commande linéaire

54

Modification du moment
cinétique total $H_{TOT}$ en
repère inertiel

56

**Fig. 3**

Fig.4

**EP 3 248 079 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2690020 A2